# DEMANDE DE BREVET EUROPEEN

(11) **EP 2 058 285 A1**
(43) Date de publication de la demande: **13.05.2009**
(21) Numéro de dépôt: 08370016.1
(22) Date de dépôt: 11.08.2008
(51) Int. Cl.: C02F 11/16, C02F 11/02, C05F 7/00, C05F 17/00

(54) **Procédé de traitement des boues issues de stations d'épuration biologiques des eaux**

(30) Priorité: 17.08.2007 FR 0705879
(71) Demandeur: Analyses Mesures Pollutions (AMP), 80200 Doingt Flamicourt (FR)
(72) Inventeur: Peenaert, Eugène, 80320 Chaulnes (FR)
(74) Mandataire: Duthoit, Michel Georges André

(57) **Abrégé**

La présente invention concerne un procédé de traitement des boues, notamment des boues issues des stations d'épuration des eaux et autres matières, lesdites boues permettant la recombinaison des matières organiques sous forme d'humus, procédé dans lequel on ajoute aux boues un substrat d'origine végétal et de la matière minérale.

Selon la présente invention, le procédé comprend au moins les étapes suivantes, réalisées sans broyage ni micronisation des matières inorganiques ajoutées aux boues :
- dans une première étape, on ajoute et on mélange auxdites boues un substrat d'origine végétale à forte composante ligneuse afin de provoquer la fermentation des matières organiques mélangées auxdites boues,
- dans une deuxième étape, on ajoute audit mélange des boues et du substrat d'origine végétale, obtenu lors de la première étape, une matière minérale, contenant notamment de l'argile, afin d'adsorber les composés volatils générés par la fermentation et de fixer les composés minéraux présents dans ledit mélange,
- dans une troisième étape, on étale en couches uniformes l'ensemble des matières à l'air libre afin de provoquer une fermentation en aérobiose.

La présente invention concerne également l'utilisation du produit obtenu par le procédé décrit dans la présente invention, pour l'aménagement des espaces verts, l'horticulture ou la fertilisation des sols.

## Description

La présente invention concerne un procédé de traitement des boues issues de stations d'épuration biologiques des eaux et de tous autres composés organiques fermentescibles.

Plus particulièrement, les boues issues du traitement biologique des eaux sont des microorganismes composés essentiellement d'acides aminées.

Actuellement, on connaît plusieurs procédés possibles pour recycler ou éliminer les boues des stations d'épuration biologiques des eaux ou de tout autre composés organiques fermentescibles.

On connaît notamment un procédé de traitement des boues consistant dans l'épandage direct, avec enfouissement.

On connaît, par ailleurs, un procédé de chaulage et/ou floculation avec pressage.

On connaît, en outre, un procédé qui consiste dans l'incinération des boues.

Cela étant, ces procédés présentent certains inconvénients, notamment en ce qui concerne leur mise en oeuvre, particulièrement coûteuse.

Par ailleurs, selon les procédés utilisés, la décomposition de ces boues s'accompagne d'odeurs nauséabondes, de la libération plus ou moins rapide de l'azote partiellement sous forme ammoniacale.

Plus récemment, un autre procédé de traitement de boues a été décrit dans le document EP-1.350.778. Ce procédé de traitement de boues de station d'épuration consiste à mélanger les boues avec un composant riche en carbone et une matière minérale, dans des conditions aérées, et présentant un rapport en matière organique/matière minérale dans le mélange de sorte à diminuer ou empêcher la fermentation des matières organiques.

Malgré certains avantages présentés par ce procédé, qui exige la micronisation de certains composés ajoutés aux boues, ce procédé n'assure pas la recombinaison des matières organiques sous forme d'humus stable et libère dans sa partie minérale une grande quantité d'azote ammoniacale.

On connaît du document FR-2.204.592 un procédé de préparation d'un compost à partir de boues d'épuration par un procédé de décomposition contrôlable par l'apport d'air. La boue d'épuration est mélangée avec un support carboné puis introduite dans un réacteur d'aération. L'oxygène nécessaire à la réaction de décomposition est obtenu en introduisant de l'air mais également de l'oxygène pur.

On connaît du document US-4.249.929 un procédé pour la décomposition des matières organiques. Les boues sont tout d'abord additionnées avec des particules carbonées telles que sciure, paille, voire du compost. L'ensemble est alors mixé puis introduit dans un réacteur d'aération. La consommation en oxygène des microorganismes dans le réacteur est ajustée en contrôlant le flux d'air entrant dans ce dernier. L'air peut être éventuellement enrichi avec de l'oxygène.

On connaît du document DE-43 24 208 un procédé pour le compostage des boues d'épuration, reposant sur le principe de celui du document DE OS 2.253.009 dans lequel les boues d'épuration sont mixées avec un support carboné, l'ensemble introduit dans un réacteur d'aération. Selon le document DE-43 24 208, on ajoute aux produits mixés de la montmorillonite afin de capturer les métaux lourds.

On connaît du document EP-1.180.499 un procédé de compostage d'une suspension aqueuse de matières organiques, en particulier des boues d'épuration dans laquelle la suspension est introduite par intervalles, pendant une période de plusieurs années, à partir du haut, dans un bassin de compostage. Dans ce bassin se trouvent, au-dessus d'une étanchéité inférieure, une couche de drainage et une couche de substrat végétal dans laquelle sont plantés des végétaux. Selon ce document, on ajoute des minéraux d'argile à la suspension de matières organiques.

On connaît du document EP-0.649.825 un procédé pour le traitement des boues d'épuration en mixant, des boues stabilisées, partiellement déshydratées avec des matériaux inorganiques. La mise en oeuvre de ce procédé exige notamment le broyage des matières inorganiques ajoutées aux boues.

Le but de la présente invention est donc de proposer un procédé différent qui pallie les inconvénients précités, notamment au niveau de la facilité de la mise en oeuvre dudit procédé.

Un autre but de la présente invention est de proposer un procédé dans lequel il n'est pas nécessaire de broyer ni de microniser la matière inorganique à ajouter aux boues.

Un autre but de l'invention est de proposer un procédé ne nécessitant pas d'autres apports en oxygène que celui de l'air

Un autre but de la présente invention est de proposer un procédé qui ne nécessite pas de dispositif spécifique, plus particulièrement réacteur pour sa mise en oeuvre.

Un autre but de l'invention est de proposer ainsi un procédé particulièrement simple de mise en oeuvre et peu coûteux.

D'autres buts et avantages de la présente invention apparaîtront au cours de la description qui va suivre qui n'est donnée qu'à titre indicatif et qui n'a pas pour but de la limiter.

La présente invention concerne un procédé de traitement des boues, notamment des boues issues des stations d'épuration des eaux, lesdites boues contenant, outre de l'eau et des composés minéraux, des matières organiques qui favorisent la prolifération des micro-organismes qui se multiplient et réorganisent la matière organique, procédé dans lequel on ajoute aux boues un substrat d'origine végétal et de la matière organique, caractérisé en ce que ledit procédé comprenant au moins les étapes suivantes, réalisées sans broyage ni micronisation des matières inorganiques ajoutées aux boues :
- une première étape, dans laquelle on ajoute et on mélange auxdites boues un substrat d'origine végétale à forte composante ligneuse afin de provoquer la fermentation des matières organiques mélangées auxdites boues,
- une deuxième étape, dans laquelle on ajoute audit mélange de boues et du substrat d'origine végétale, obtenu lors de la première étape, une matière minérale, contenant de l'argile, afin d'adsorber les composés volatils générés par la fermentation et de fixer les composés minéraux présents dans ledit deuxième mélange,
- une troisième étape, dans laquelle on étale en couche uniforme l'ensemble des matières à l'air libre, notamment sur un sol étanche à l'abri des intempéries, afin de provoquer une fermentation en aérobiose.

La présente invention concerne, en outre, l'utilisation du produit obtenu par le procédé tel que décrit dans la présente invention, dans l'aménagement urbain, en horticulture ou la fertilisation des sols.

L'invention sera mieux comprise à la lecture de la description suivante dans laquelle nous développons plus en détail la présente invention.

La présente invention concerne tout d'abord un procédé de traitement des boues, notamment des boues issues des stations d'épuration des eaux, et autres matières, lesdites boues permettant la recombinaison des matières organiques sous forme d'humus.

Eventuellement, les boues peuvent être complétées par tous autres composés fermentescibles, matières organiques biodégradables, telles que par exemple, déchets issus de l'agriculture.

Ledit procédé comprend au moins les étapes suivantes:

Dans une première étape, on ajoute et on mélange auxdites boues un substrat d'origine végétale à forte composante ligneuse afin de provoquer la fermentation des matières organiques mélangées auxdites boues.

Dans une deuxième étape, on ajoute audit mélange de boues et du substrat d'origine végétale, obtenu lors de la première étape, une matière minérale, contenant notamment de l'argile, afin d'adsorber les composés volatils générés par la fermentation et de fixer les composés minéraux présents dans ledit deuxième mélange.

L'avantage du présent procédé tel que décrit ci-dessus, est de ne pas exiger le broyage ou la micronisation de la matière inorganique. En effet, un simple tamisage du substrat argileux est suffisant afin d'éliminer les parties les plus grossières, telles que les cailloux ou pierres, de dimension supérieure à 10 mm.

Un autre avantage réside dans le fait que ce procédé a lieu sans libération de grande quantité d'azote ammoniacale ni d'odeurs nauséabondes.

Après les phases de mélange, l'ensemble des matières est étalé en couche uniforme, par exemple sur un sol étanche à l'abri des intempéries. Sur ce sol, les échanges gazeux se font naturellement. La maturation du produit, selon la présente invention, dure entre trois et quatre semaines, selon les conditions climatiques.

La seule source d'oxygène nécessaire à la fermentation en aérobiose est ici l'oxygène de l'air, l'opération se déroulant à l'air libre.

Selon un mode particulier de la présente invention, les deux étapes dudit procédé de traitement des boues peuvent être réalisées simultanément.

Selon un autre mode particulier de la présente invention,les deux étapes dudit procédé de traitement des boues peuvent être réalisées simultanément. Selon un mode particulier de la présente invention, ledit substrat d'origine végétale ajouté auxdites boues lors de la première étape est choisi parmi la paille et/ou le déchet de bois et/ou la sciure et/ou tout autre substrat ligneux.

Le compostage par voie aérobie des boues avec un substrat d'origine végétale, tel que la paille, le déchet de bois, les sciures ou tout autre substrat végétal à forte composante ligneuse, peut générer des dérivés soufrés volatils ou d'autres molécules organiques d'odeurs nauséabondes.

Selon un mode particulier de la présente invention, la matière minérale, notamment argileuse, ajoutée lors de la deuxième étape afin d'adsorber les composés volatils générés par la fermentation présents dans ledit mélange est un composé à base d'argile, ou un substrat minéral contenant de l'argile.

En effet, l'ajout d'argile en quantité suffisante permet d'absorber les composés volatils générant les odeurs nauséabondes ou irritantes et divers fertilisants volatils, minimisant ainsi l'impact négatif à la revalorisation des boues.

L'ajout d'argile au procédé permet en outre de fixer également les autres composés minéraux obtenus par compostage, ou déjà contenus dans le milieu, par exemple, la transformation de l'azote organique en azote ammoniacal ou du phosphore organique en phosphore minéral.

Selon la présente invention, le substrat d'origine végétale se présente sous la forme de particules dont la taille est supérieure à 0,5 mm.

Le produit obtenu selon le procédé de la présente invention est destiné à être utilisé pour l'aménagement des espaces verts, l'horticulture ou la fertilisation des sols.

Naturellement, d'autres modes de mise en oeuvre, à la portée de l'homme de l'art, auraient pu être envisagés sans pour autant sortir du cadre de la présente invention.

## Revendications

1. Procédé de traitement des boues, notamment des boues issues des stations d'épuration des eaux et autres matières, lesdites boues permettant la recombinaison des matières organiques sous forme d'humus, procédé dans lequel on ajoute aux boues un substrat d'origine végétal et de la matière minérale, **caractérisé en ce que** ledit procédé comprenant au moins les étapes suivantes, réalisées sans broyage ni micronisation des matières inorganiques ajoutées aux boues :
- dans une première étape, on ajoute et on mélange auxdites boues un substrat d'origine végétale à forte composante ligneuse afin de provoquer la fermentation des matières organiques mélangées auxdites boues,
- dans une deuxième étape, on ajoute audit mélange de boues et du substrat d'origine végétale, obtenu lors de la première étape, une matière minérale, contenant de l'argile, afin d'adsorber les composés volatiles générés par la fermentation et de fixer les composés minéraux présents dans ledit mélange,
- dans une troisième étape, on étale en couche uniforme l'ensemble des matières à l'air libre afin de provoquer une fermentation en aérobiose.

2. Procédé selon la revendication 1, dans lequel les deux dites étapes, première et deuxième étapes, sont réalisées simultanément.

3. Procédé selon la revendication 1 ou 2, dans lequel ledit substrat d'origine végétale à forte composante ligneuse ajouté auxdites boues lors de la première étape est choisi parmi la paille et/ou le déchet de bois et/ou la sciure.

4. Procédé selon l'une des revendications 1 à 3, dans lequel ladite matière minérale ajoutée lors de la deuxième étape afin d'adsorber les composés volatiles générés par la fermentation présents dans ledit mélange est un composé à base d'argile ou un substrat minéral contenant de l'argile.

5. Procédé selon l'une des revendication 1 à 4, dans lequel le substrat d'origine végétale se présente sous la forme de particules dont la taille est supérieure à 0.5 mm.

6. Procédé selon l'une des revendications 1 à 5, dans lequel la maturation des matières étalées dure entre trois et quatre semaines.

7. Utilisation du produit obtenu par le procédé tel que décrit aux revendications 1 à 6, pour l'aménagement des espaces verts, l'horticulture ou la fertilisation des sols.
